(19) Europäisches Patentamt
European Patent Office
Office européen des brevets

(11) EP 0 746 437 B1

(12) **EUROPÄISCHE PATENTSCHRIFT**

(45) Veröffentlichungstag und Bekanntmachung des Hinweises auf die Patenterteilung:
**05.08.1998 Patentblatt 1998/32**

(21) Anmeldenummer: **95909706.4**

(22) Anmeldetag: **10.02.1995**

(51) Int. Cl.⁶: $\text{B23B 5/40}$

(86) Internationale Anmeldenummer:
**PCT/EP95/00494**

(87) Internationale Veröffentlichungsnummer:
**WO 95/23664 (08.09.1995 Gazette 1995/38)**

(54) **VERFAHREN ZUR HERSTELLUNG EINER HINTERSCHNITTENEN, KONKAVEN, IN SICH GESCHLOSSENEN LAGERFLÄCHE**

METHOD OF PRODUCING AN UNDERCUT, CONCAVE, SELF-CONTAINED BEARING SURFACE

PROCEDE DE FABRICATION D'UNE SURFACE PORTANTE, CONCAVE, FERMEE EN SOI ET PRESENTANT DES CONTRE-DEPOUILLES

(84) Benannte Vertragsstaaten:
**DE FR GB IT SE**

(30) Priorität: **02.03.1994 DE 4406856**

(43) Veröffentlichungstag der Anmeldung:
**11.12.1996 Patentblatt 1996/50**

(73) Patentinhaber:
**BRUENINGHAUS HYDROMATIK GMBH
89275 Elchingen (DE)**

(72) Erfinder: **WAGENSEIL, Ludwig
D-89269 Vöhringen (DE)**

(74) Vertreter:
**Körber, Wolfhart, Dr. rer.nat.
Patentanwälte
Mitscherlich & Partner,
Sonnenstrasse 33
80331 München (DE)**

(56) Entgegenhaltungen:
**DE-A- 3 920 969          US-A- 3 212 405
US-A- 4 593 444**

## Beschreibung

Die Erfindung betrifft ein Verfahren zur Herstellung einer hinterschnittenen, konkaven und in sich geschlossenen Lagerfläche nach dem Oberbegriff des Anspruches 1 und wie z.B. aus dem Dokument US-A-3 212 405 bekannt.

Dieses Verfahren ist als sog. Wirbelverfahren bekannt, das bei der Fertigung von Axial- und Radialkolbenmaschinen eingesetzt wird, um zur Lagerung von Kugelzapfen an Verdrängungskörpern oder Gleitschuhen bestimmte Hohlkugelabschnitte in huberzeugenden Körpern, wie etwa den Triebscheiben von Schrägachsenmaschinen, Gleitschuhen bzw. Verdrängungskörpern, wie etwa Kolben, auszubilden. Die konkave Lagerfläche jedes Hohlkugelabschnitts reicht über den Kugel-Äquator hinaus; ihr oberhalb desselben befindlicher Bereich ist somit hinterschnitten und übernimmt beispielsweise im Fall der Lagerung eines Kolbens die erforderliche Kolbenrückzugfunktion.

Der Durchmesser der Werkzeugschneiden-Umlaufbahn ist gleich der Länge einer Sehne, die sich vom oberen Begrenzungsrand der kalottenförmigen konkaven Lagerfläche bis zu deren unteren Scheitelpunkt erstreckt. Durch Vorschub des in die Einsenkung eingefahrenen Werkzeuges entlang seiner im gleichen Neigungswinkel zur Vertikalachse wie die Sehne zum oberen Begrenzungsrand bzw. Kugel-Äquator schräggestellten Werkzeug-Drehachse so weit, bis die Schneiden-Umlaufbahn den oberen Begrenzungsrand der Lagerfläche und damit auch deren unteren Scheitelpunkt berührt, wird der gewünschte Hohlkugelabschnitt hergestellt.

Infolge des durch die Größe der Hinterschneidung bestimmten Neigungswinkels von größer als 45°, den die Werkzeug-Drehachse mit der Vertikalachse einschließt, ergibt sich ein relativ dünner Werkzeug-Spannschaft, der nur entsprechend geringe Belastungen und Vorschubgeschwindigkeiten des Werkzeugs erlaubt, da andernfalls die erforderliche hohe Arbeitsgenauigkeit nicht gewährleistet ist. Dies bedeutet, daß die Fertigungszeiten unerwünscht lang sind und die erforderliche Maßgenauigkeit der Lagerfläche in Frage gestellt ist.

Aus der US-A-45 93 444 geht die Ausbildung von Hohlkugeln zur Aufnahme von Kugelköpfen hervor. Ferner ist ein entsprechendes Herstellungsverfahren beschrieben. Das dort beschriebene Herstellungsverfahren ist jedoch relativ aufwendig und führt in der Serienfertigung zu relativ hohen Stückkosten.

Es ist Aufgabe der Erfindung, das Verfahren der eingangs genannten Art so weiterzubilden, daß die Fertigungszeit reduziert und die Maßgenauigkeit der hinterschnittenen Lagerfläche vergrößert werden kann.

Diese Aufgabe wird dadurch gelöst, daß die den Durchmesser der Schneiden-Umlaufbahn bestimmende Sehne vom Kugel-Äquator ausgeht, und daß der Bereich der Einsenkung unterhalb des Kugel-Äquators und derjenige oberhalb des Kugel-Äquators mit zwei getrennten Vorschubbewegungen nacheinander bearbeitet werden.

Auf diese Weise bleibt bei der Festlegung des Durchmessers der Schneiden-Umlaufbahn die Hinterschneidung der Lagerfläche unberücksichtigt, so daß die Werkzeug-Drehachse während des Vorschubs mit einem Neigungswinkel gegenüber der Vertikalachse schräggestellt ist, der gleich oder kleiner als 45° ist. Dementsprechend kann der Werkzeug-Spannschaft stärker ausgebildet werden, so daß er größeren Belastungen standhält und somit höhere Vorschubgeschwindigkeiten des Werkzeugs und damit kürzere Fertigungszeiten bei höherer Maßgenauigkeit ermöglicht. Der erfindungsgemäß festgelegte, die Hinterschneidung der Lagerfläche nicht berücksichtigende Durchmesser der Schneiden-Umlaufbahn macht es erforderlich, die beiden Lagerflächenbereiche unter- und oberhalb des Kugel-Äquators in zwei getrennten Vorschubbewegungen herzustellen, die vorzugsweise mit in gleicher Lage befindlicher Werkzeug-Drehachse, also entlang der gleichen Vorschubachse, in entgegengesetzten Richtungen durchgeführt werden. Der Mehraufwand an Zeit für diese zwei Vorschubbewegungen ist im Vergleich zum Stand der Technik sehr gering und wird bei weitem durch den sich aus den höheren Vorschubgeschwindigkeiten ergebenden Zeitgewinn aufgewogen.

Zur Herstellung der beiden Lagerflächenbereiche beidseits des Kugel-Äquators mit gleichem Radius R wird das in die Einsenkung eingefahrene Werkzeug zweckmäßigerweise mit einer der beiden Vorschubbewegungen entlang der schräggestellten Werkzeug-Drehachse tiefer in die Einsenkung hinein verfahren, bis es bei Fertigstellung des Lagerflächenbereichs unterhalb des Kugel-Äquators eine Endstellung einnimmt, in der die Ebene der Schneiden-Umlaufbahn die Sehne der Kugel mit dem Radius R enthält; sodann wird das Werkzeug mit der anderen Vorschubbewegung mit entgegengesetztem Richtungssinn verfahren, bis es bei Fertigstellung des Lagerflächenbereichs oberhalb des Kugel-Äquators eine weitere Endstellung einnimmt, in der die Ebene der Schneiden-Umlaufbahn eine weitere, zur erstgenannten Sehne parallel mit gleicher Länge in der Kugel mit dem Radius R verlaufende Sehne enthält.

Gemäß einer Weiterbildung der Erfindung wird das Werkzeug zusätzlich zu der während der Herstellung des Lagerflächenbereichs oberhalb des Kugel-Äquators durchgeführten Vorschubbewegung entlang der Werkzeug-Drehachse in einer weiteren Vorschubbewegung senkrecht zum Kugel-Äquator in Richtung nach außerhalb der Einsenkung verfahren. Auf diese Weise kann eine Lagerfläche hergestellt werden, deren Lagerflächenbereiche beidseits des KugelÄquators gleiche Radien aufweisen, die von zwei auf der Vertikalachse gelegenen, gegeneinander verschobenen Mittelpunkten ausgehen. Dadurch ergibt sich das für die Funktion des von der konkaven Lagerfläche und dem Kugelzapfen gebildeten Kugelgelenks, insbesondere für die Ausbildung des Schmierfilms, erforderliche Spiel im Lagerflächenbereich oberhalb des Kugel-Äquators ohne Beeinträchtigung der Funktion des Lagerflächenbereichs unterhalb des Kugel-Äquators, dessen Radius so auf den Kugelzapfen abgestimmt werden kann, daß in diesem Bereich möglichst geringes Spiel herrscht.

Das erforderliche Spiel im Lagerflächenbereich oberhalb des Kugel-Äquators kann auch mit einer Lagerfläche erzielt werden, deren Lagerflächenbereich oberhalb des Kugel-Äquators einen Radius aufweist, der größer als der Radius des Lagerflächenbereichs unterhalb des Kugel-Äquators ist. Dieser größere Radius wird zweckmäßigerweise dadurch hergestellt, daß das Werkzeug mit der anderen der beiden Vorschubbewegungen entlang der unter dem Neigungswinkel schräggestellten Werkzeug-Drehachse mit einem entsprechend größeren Vorschub verfahren wird als im Fall der Herstellung der vorgenannten Lagerflächenbereiche mit gleichem Radius beidseits des Kugel-Äquators, so daß es bei Fertigstellung des Lagerflächenbereichs oberhalb des Kugel-Äquators eine weitere Endstellung einnimmt, in der die Ebene der Schneiden-Umlaufbahn eine weitere, zur erstgenannten Sehne parallele Sehne gleicher Länge enthält, die in einer Kugel mit einem Radius verläuft, der größer als der Radius der Kugel mit der erstgenannten Sehne ist.

Wenn die Lagerfläche die gesamte Kugelkalotte umfaßt, verbindet die den Durchmesser der Schneiden-Umlaufbahn bestimmende Sehne den Kugel-Äquator mit dem unteren Scheitelpunkt der Kugelkalotte. Eine derartig verlaufende Sehne kann auch für den Fall verwendet werden, daß die Lagerfläche nur einen Teil der Kugelkalotte umfaßt, d.h. als eine an ihrem unteren Begrenzungsrand offene Kugelzone ausgebildet ist. Jedoch ist es bei einer solchen, an ihrem unteren Begrenzungsrand offenen Kugelzone günstiger, mit der Sehne einen Punkt dieses unteren Begrenzungsrandes mit einem diametral gegenüberliegenden Punkt auf dem Kugel-Äquator zu verbinden, um auf diese Weise eine geringere Schrägstellung der Werkzeug-Drehachse gegenüber der Vertikalachse zu erzielen, d.h. einen stärkeren Werkzeug-Spannschaft zu ermöglichen.

Weitere Merkmale und Vorteile der Erfindung ergeben sich aus den verbleibenden Unteransprüchen.

Nachstehend ist die Erfindung anhand eines bevorzugten Ausführungsbeispiels unter Bezugnahme auf die einzige beigefügte Figur näher beschrieben, die im Vertikalschnitt ein Werkzeug in Annäherung an ein Werkstück zeigt.

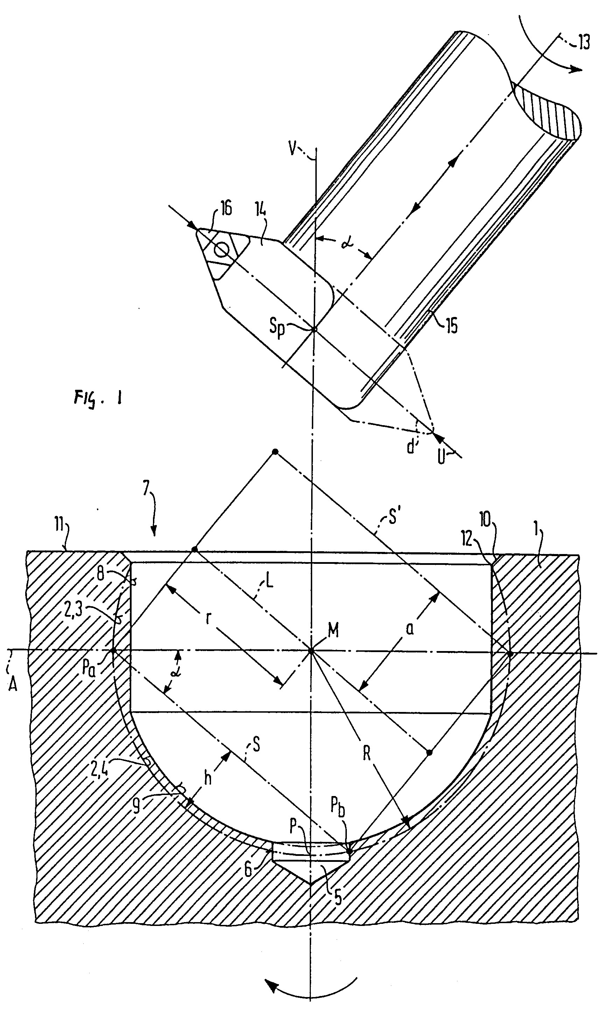

Das in der Figur teildargestellte Werkstück 1 ist die Triebscheibe einer Schrägachsenmaschine. In dieser Triebscheibe ist eine Anzahl von Hohlkugelabschnitten mit einem Radius R zur Lagerung von Kugelzapfen (nicht gezeigt) auszubilden, die sich an den freien Enden der Kolben der Schrägachsenmaschine befinden. Die konkaven Lagerflächen 2 der Hohlkugelabschnitte sind hinterschnitten, d.h. sie reichen über den jeweiligen Kugel-Äquator A hinaus, so daß sie den Rückzug der Kolben sicherstellen. Der Lagerflächenbereich oberhalb des Kugel-Äquators A ist mit dem Bezugszeichen 3 und derjenige unterhalb des Kugel-Äquators mit dem Bezugszeichen 4 bezeichnet. Im unteren Scheitelpunkt P der Lagerfläche 2 ist eine Zentrierbohrung 5 ausgebildet, die den unteren Begrenzungsrand 6 des Hohlkugelabschnittes sowie die Lage einer senkrecht zum Kugel-Äquator A durch den Kugel-Mittelpunkt M verlaufenden Vertikalachse V festlegt.

Die Hohlkugelabschnitte sind auf dem Teilkreis der Kolben mit einem nicht gezeigten Formbohrer unter Bildung von Einsenkungen 7, jeweils mit der Zentrierbohrung 5, möglichst knapp vorgearbeitet. Jede Einsenkung 7 weist einen oberen, zylindrischen Flächenanteil 8, der bis unterhalb des Kugel-Äquators A reicht, sowie einen unteren Flächenanteil 9 in Form einer Kugelzone auf. Die obere Kante des oberen, zylindrischen Flächenanteils 8 ist über eine Anfasung 10 mit der oberen Fläche 11 des Werkstücks 1 verbunden und stellt den oberen Begrenzungsrand 12 der konkaven Lagerfläche 2 dar.

Der untere Flächenanteil 9 der Einsenkung 7 sowie die konkave Lagerfläche 2 weisen jeweils die Form einer Kugelkalotte auf, wenn keine Zentrierbohrung verwendet wird.

Jede Einsenkung 7 ist durch spanende Bearbeitung mittels eines um eine Werkzeug-Drehachse 13 drehbaren Werkzeugs 14 in einen Hohlkugelabschnitt umzuformen. Das lediglich schematisch dargestellte Werkzeug 14 ist auf einem mit Hilfe eines nicht gezeigten Drehantriebs drehbaren Werkzeug-Spannschaft 15 aufgespannt, dessen Längsmittelachse die Werkzeug-Drehachse 13 bildet. Es weist eine Werkzeug-Schneide 16 mit einem Schneidenanteil als Hauptschneide an den Stirnseiten und einer Nebenschneide am Umfang auf. Der Durchmesser d der Schneiden-Umlaufbahn U ist größer als der Durchmesser des Werkzeug-Spannschaftes 15 und so gewählt, daß er gleich der Länge einer Sehne S ist, die sich von einem beliebigen Punkt $P_a$ auf dem Kugel-Äquator A bis zu einem diametral gegenüberliegenden Punkt $P_b$ auf dem unteren Begrenzungsrand 6 erstreckt.

Das Werkstück 1 ist auf einem um eine vertikale Drehachse drehbaren Rundtisch (nicht gezeigt) mittels einer Spanneinrichtung (ebenfalls nicht gezeigt) so aufgespannt, daß der Teilkreis, auf dem die Einsenkungen 7 angeordnet sind, die Drehachse des Rundtisches schneidet. Die Spanneinrichtung kann um das Zentrum des Teilkreises relativ zum Rundtisch taktweise gedreht werden, um jeweils eine der Zentrierbohrungen 5 der Einsenkungen 7 mit der vertikalen Drehachse des Rundtisches zur Deckung zu bringen. Sobald dies geschehen ist, wird der Rundtisch und damit das Werkstück 1 in Drehung versetzt, beispielsweise im Uhrzeigersinn.

Das Werkzeug 14 ist oberhalb des Werkstücks 1 mittels seines Werkzeug-Spannschaftes 15 in einer um eine horizontale Schwenkachse schwenkbaren sowie horizontal und vertikal verfahrbaren Spanneinrichtung (nicht gezeigt) eingespannt und wird durch entsprechendes Schwenken gegenüber der mit der Drehachse des Rundtisches zusammenfallenden, durch die Zentrierbohrung 5 definierten Vertikalachse V mit einem Neigungswinkel α schräggestellt, der gleich dem Winkel ist, den die Sehne S mit dem Kugel-Äquator A einschließt. Das Werkstück 14 wird mittels eines nicht gezeigten Antriebs im Gegenuhrzeigersinn in Drehung versetzt und dann so weit entlang seiner Werkzeug-Drehachse 13 verfahren, bis der Schnittpunkt Sp der Umlaufbahn U der Werkzeug-Schneide 16 mit der Werkzeug-Drehachse 13 auf der Vertikalachse V liegt, wie dies in der Figur gezeigt ist. Sodann wird das Werkzeug 14 entlang der Vertikalachse V in die Einsenkung 7 eingefahren, bis der Schnittpunkt Sp auf dem Kugel-Äquator A liegt, d.h. bis die Schneiden-Umlaufbahn U mit der strich-punktierten Linie L in der Figur übereinstimmt.

Um nun den Lagerflächenbereich 4 unterhalb des Kugel-Äquators A durch spanende Bearbeitung der Einsenkung 7 herzustellen, wird das Werkzeug 14 mit einer ersten Vorschubbewegung entlang seiner Werkzeug-Drehachse 13 schräg nach unten bis in eine erste, durch die strich-punktierte Linie S in der Figur angezeigte Endstellung verfahren, in der die Sehne S in der Ebene der Schneiden-Umlaufbahn U liegt. Der Vorschub a ist gleich dem radialen Abstand der Sehne S vom Kugel-Mittelpunkt M.

Sodann wird das Werkzeug 14 durch eine zweite Vorschubbewegung mit dem Vorschub a entlang der Werkzeug-Drehachse 13 mit einem dem Richtungssinn der ersten Vorschubbewegung entgegengesetzten Richtungssinn so weit verfahren, bis seine Schneiden-Umlaufbahn U erneut den Kugel-Äquator A berührt und damit die in der Figur durch die strich-punktierte Linie S' angezeigte zweite Endstellung einnimmt, in der die Ebene der Schneiden-Umlaufbahn U eine zweite, zur erstgenannten Sehne S parallel und mit gleicher Länge in der Kugel mit dem Radius R verlaufende Sehne S' enthält. Der Hohlkugelabschnitt ist mit dem gewünschten Radius $R = 1/2 (r^2/h + h)$ fertiggestellt, wobei r der Radius der Schneiden-Umlaufbahn U und h der Abstand der Sehne S von der Lagerfläche 2, gemessen auf der Mittel senkrechten der Sehne S, ist.

Während der zweiten Vorschubbewegung kann das Werkzeug in vertikaler Richtung nach oben verfahren und auf diese Weise der Mittelpunkt M des Lagerflächenbereichs 3 mit dem Radius R oberhalb des Kugel-Äquators A gegenüber dem Mittelpunkt M des Lagerflächenbereichs 4 mit dem gleichen Radius R unterhalb des Kugel-Äquators entsprechend verlagert werden.

Andererseits kann durch Verfahren des Werkzeugs während der zweiten Vorschubbewegung mit einem Vorschub, der etwas größer als der vorgenannte Vorschub a ist, der Lagerflächenbereich 3 oberhalb des Kugel-Äquators A mit einem Radius hergestellt werden, der entsprechend größer als der Radius R ist.

Nachdem die konkave Lagerfläche 2 auf diese Weise fertiggestellt ist, wird das Werkzeug 14 aus dem Hohlkugelabschnitt ausgefahren. Durch taktweises Drehen der Spanneinrichtung gegenüber dem Rundtisch wird die Zentrierbohrung 5 der nächsten Einsenkung 7 mit der Drehachse des Rundtisches zur Deckung gebracht; die vorstehend beschriebenen Verfahrensschritte werden nun wiederholt.

Die Schnittbewegung während beider Vorschubbewegungen setzt sich zusammen aus der Umlaufbewegung der Werkzeug-Schneide 16 und der Drehbewegung des Werkstücks 1 um die Vertikalachse V. Die gleiche Schnittbewegung kann bei stillstehendem Werkstück 1 durch eine Kreiselbewegung des Werkzeugs 14 um die Vertikalachse V bei Aufrechterhaltung des Neigungswinkels α erzielt werden.

Im Unterschied zur vorstehend beschriebenen Verfahrensweise kann zuerst der Lagerflächenbereich 3 oberhalb und sodann derjenige unterhalb des Kugel-Äquators A hergestellt werden.

Das Einfahren des Werkzeugs 14 in die Einsenkung 7 muß nicht notwendigerweise entlang der Vertikalachse geschehen, sondern kann auch parallel zu derselben vorgenommen werden.

**Patentansprüche**

1. Verfahren zur Herstellung einer hinterschnittenen, konkaven und in sich geschlossenen Lagerfläche (2), die zumindest Teil einer über den Kugel-Äquator (A) hinausreichenden Kalotte einer Kugel mit zumindest angenähert konstantem Radius (R) ist, durch spanende Bearbeitung einer in einem Werkstück (1) vorgeformten Einsenkung (7) mittels eines Werkzeugs (14) mit wenigstens einer um eine Werkzeug-Drehachse (13) umlaufenden Werkzeug-Schneide (16), deren Umlaufbahn (U) einen Durchmesser (d) aufweist, der gleich der Länge einer sich bis zu einem tiefsten Punkt ($P_b$) der Lagerfläche erstreckenden Sehne (S) ist, wobei die Schnittbewegung sich zusammensetzt aus der Umlaufbewegung der Werkzeug-Schneide und einer drehenden Relativbewegung zwischen Werkstück und Werkzeug um eine senkrecht zum Kugel-Äquator durch den Kugel-Mittelpunkt (M) verlaufenden Vertikalachse (V) und die Vorschubbewegung eine Relativbewegung des Werkzeugs zum Werkstück entlang der im gleichen Neigungswinkel (α) gegenüber der Vertikalachse wie die Sehne (S) zum Kugel-Äquator (A) schräggestellten Werkzeug-Drehachse ist, **dadurch gekennzeichnet,** daß die den Durchmesser (d) der Schneiden-Umlaufbahn (U) bestimmende Sehne (S) vom Kugel-Äquator (A) ausgeht, und daß der Bereich der Einsenkung (7) unterhalb des Kugel-Äquators (A) und derjenige oberhalb des Kugel-Äquators (A) mit zwei getrennten Vorschubbewegungen nacheinander bearbeitet werden.

2. Verfahren nach Anspruch 1,
**dadurch gekennzeichnet**,
daß die den Durchmesser (d) der Schneiden-Umlaufbahn (U) bestimmende Sehne (S) den Kugel-Äquator (A) mit dem unteren Scheitelpunkt (P) der Lagerfläche (2) verbindet.

3. Verfahren nach Anspruch 1,
**dadurch gekennzeichnet**,
daß die Lagerfläche (2) die Form einer Kugelzone aufweist, und daß die den Durchmesser (d) der Schneiden-Umlaufbahn (U) bestimmende Sehne (S) den Kugel-Äquator (A) mit dem unteren Begrenzungsrand (6) der Kugelzone verbindet.

4. Verfahren nach Anspruch 3,
**dadurch gekennzeichnet**,
daß die den Durchmesser (d) der Schneiden-Umlaufbahn (U) bestimmende Sehne (S) den Kugel-Äquator (A) mit einem diametral gegenüberliegenden Punkt ($P_b$) des unteren Begrenzungsrandes (6) der Kugelzone verbindet.

5. Verfahren nach wenigstens einem vorhergehenden Anspruch,
**dadurch gekennzeichnet**,
daß beide Vorschubbewegungen mit in gleicher Lage befindlicher Werkzeug-Drehachse (13) mit einander entgegengesetztem Richtungssinn durchgeführt werden.

6. Verfahren nach wenigstens einem vorhergehenden Anspruch,
**dadurch gekennzeichnet**,
daß das Werkzeug (14) durch Einfahren in die Einsenkung (7) bis zum Erreichen einer Lage (L) zugestellt wird, von der aus es mit einer der beiden Vorschubbewegungen entlang der unter dem Neigungswinkel (α) schräggestellten Werkzeug-Drehachse (13) verfahren wird, bis es bei Fertigstellung des Lagerflächenbereichs (4) unterhalb des Kugel-Äquators (A) eine Endstellung (S) einnimmt, in der die Ebene der Schneiden-Umlaufbahn (U) die Sehne (S) der Kugel mit dem Radius (R) enthält.

7. Verfahren nach wenigstens einem vorhergehenden Anspruch,
**dadurch gekennzeichnet**,
daß das Werkzeug (14) mit der anderen der beiden Vorschubbewegungen entlang der unter dem Neigungswinkel (α) schräggestellten Werkzeug-Drehachse (13) verfahren wird, bis es bei Fertigstellung des Lagerflächenbereichs (3) oberhalb des Kugel-Äquators (A) eine weitere Endstellung (S') einnimmt, in der die Ebene der Schneiden-Umlaufbahn (U) eine weitere, zur erstgenannten Sehne (S) parallel und mit gleicher Länge in der Kugel mit dem Radius (R) verlaufende Sehne (S') enthält.

8. Verfahren nach wenigstens einem der Ansprüche 1 bis 6,
**dadurch gekennzeichnet**,
daß das Werkzeug (14) mit der anderen der beiden Vorschubbewegungen entlang der unter dem Neigungswinkel (α) schräggestellten Werkzeug-Drehachse (13) verfahren wird, bis es bei Fertigstellung des Lagerflächenbereichs (3) oberhalb des Kugel-Äquators (A) eine weitere Endstellung einnimmt, in der die Ebene der Schneiden-Umlaufbahn (U) eine weitere, zur erstgenannten Sehne (S) parallele Sehne gleicher Länge enthält, die in einer Kugel mit einem Radius verläuft, der größer als der Radius (R) der Kugel mit der Sehne (S) ist.

9. Verfahren nach wenigstens einem der Ansprüche 6 bis 8,
**dadurch gekennzeichnet**,
daß bei in der Lage (L) befindlichem Werkzeug (14) der Schnittpunkt (Sp) der Werkzeug-Drehachse (13) mit der Ebene der Schneiden-Umlaufbahn (U) im Kugel-Mittelpunkt (M) liegt.

10. Verfahren nach wenigstens einem vorhergehenden Anspruch,
**dadurch gekennzeichnet**,
daß das Werkzeug (14) zusätzlich zu der während der Herstellung des Lagerflächenbereichs (3) oberhalb des Kugel-Äquators (A) durchgeführten Vorschubbewegung entlang der Werkzeug-Drehachse (13) in einer weiteren Vorschubbewegung senkrecht zum Kugel-Äquator (A) in Richtung nach außerhalb der Einsenkung (7) verfahren wird.

**Claims**

1. Method of producing an undercut, concave and self-contained bearing surface (2), which is at least part of a spherical indentation having at least approximately constant radius (R), which indentation extends beyond the sphere equator (A), by means of machining with the removal of material of a pre-formed indentation (7) in a workpiece (1) by means of a tool (14) having at least one tool cutting edge (16) rotating around a tool axis of rotation (13), the orbit (U) of which tool cutting edge has a diameter (d) which is equal to the length of a chord (S) extending up to a deepest point ($P_b$) of the bearing surface, whereby the cutting movement is made up of the orbital movement of the tool cutting edge and a rotational relative movement between the workpiece and the tool around a vertical axis (V) extending perpendicularly of the sphere equator through the sphere centre (M), and the feed movement of the tool is a movement of the tool relative to the workpiece along the tool axis of rotation which is obliquely set at the same angle of inclination ($\alpha$) relative to the vertical axis as the chord (S) is set to the sphere equator (A),
characterized in that,
the diameter (d) of the chord (S) determining the cutting edge orbit (U) originates from the sphere equator (A), and in that the region of the indentation (7) below the sphere equator (A) and that region above the sphere equator (A) are machined one after the other with two separate feed movements.

2. Method according to claim 1,
characterized in that,
the diameter (d) of the chord (S) determining the cutting edge orbit (U) connects the sphere equator (A) with the lower apex point (P) of the bearing surface (2).

3. Method according to claim 1,
characterized in that,
the bearing surface (2) has the shape of a spherical zone, and in that the diameter (d) of the chord (S) determining the cutting edge orbit (U) connects the sphere equator (A) with the lower limiting edge (6) of the spherical zone.

4. Method according to claim 3,
characterized in that,
the diameter (d) of the chord (S) determining the cutting edge orbit (U) connects the sphere equator (A) with a point ($P_b$) of the lower limiting edge (6) of the spherical zone which lies diametrally opposite thereto.

5. Method according to any preceding claim,
characterized in that,
the two feed movements are executed with the tool axis of rotation (13) in the same disposition, with mutually opposite directions.

6. Method according to any preceding claim,
characterized in that,
the tool (14) is advanced by movement into the indentation (7) until there is attained a disposition (L) from which the tool is moved with one of the two feed movements along the tool axis of rotation (13), set obliquely at the angle of inclination ($\alpha$), until the tool - upon completion of the bearing surface region (4) below the sphere equator (A) - takes up an end position (S) in which the plane of the cutting edge orbit (U) contains the chord (S) of the sphere having the radius (R).

7. Method according to any preceding claim,
characterized in that,

with the other of the two feed movements, the tool (14) is moved along the obliquely set tool axis of rotation (13) having the angle of inclination ($\alpha$) until - upon completion of the bearing surface region (3) above the sphere equator (A) - it takes up a further end position (S') in which the plane of the cutting edge orbit (U) contains a further chord (S') running parallel to the first-mentioned chord (S) and having the same length which runs in the sphere with the radius (R).

8. Method according to any of claims 1 to 6,
characterized in that,
with the other of the two feed movements, the tool (14) is moved along the obliquely set tool axis of rotation (13) having the angle of inclination ($\alpha$) until - upon completion of the bearing surface region (3) above the sphere equator (A) - it takes up a further end position in which the plane of the cutting edge orbit (U) contains a chord parallel to the first-mentioned chord (S) and of the same length, which runs in a sphere having a radius which is greater than the radius (R) of the sphere with the chord (S).

9. Method according to any of claims 6 to 8,
characterized in that,
when the tool (14) is in the disposition (L) the intersection point ($S_p$) of the tool axis of rotation (13) with the plane of the cutting edge orbit (U) lies at the sphere centre (M)

10. Method according of any preceding claim,
characterized in that,
in addition to the feed movement along the tool axis of rotation (13) executed during the production of the bearing surface region (3) above the sphere equator (A), the tool (14) is moved in a further feed movement perpendicular to the sphere equator (A) in a direction towards the outside of the indentation (7).

**Revendications**

1. Pocédé de fabrication d'une surface portante (2) concave, fermée en soi et présentant des contre-dépouilles, qui fait au moins partie d'une calotte, dépassant de l'équateur (A), d'une sphère présentant un rayon (R) au moins approximativement constant, par usinage par eulèvement de copeaux d'un enfoncement (7), préformé dans une pièce (1), au mien d'un outil (14) avec au moins une lame d'outil (16), tournant autour de l'axe de rotation (13) de l'outil, dont la trajectoire (U) présente un diamètre (d), qui est égal à la longueur d'une corde (S) s'étendit jusqu'au point le plus bas ($P_b$) de la surface portante, le mouvement de coupe se composant du mouvement de rotation de la lame de l'outil et d'un déplacement relatif tournant entre la pièce et l'outil, autour d'un axe vertical (V), perpendiculaire à l'équateur de la sphère, passant par le centre (M) de la sphère, et le mouvement d'avance étant un déplacement relatif de l'outil par rapport à la pièce, le long de l'axe de rotation de l'outil incliné du même angle d'inclinaison ($\alpha$) par rapport à l'axe vertical que la corde (S) par rapport à l'équateur (A) de la sphère caractérisé en ce que la corde (S), déterminant le diamètre (d) de la trajectoire (U) des lames part de l'équateur (A) de la sphère, et en ce que la zone de l'enfoncement (7) au-dessous de l'équateur (A) de la sphère et celle située au-dessus de l'équateur (A) sont usinées l'une après l'autre avec deux mouvements d'avance séparés.

2. Procédé selon la revendication 1, caractérisé en ce que la corde (S), déterminant le diamètre (d) de la trajectoire (U) des lames, relie l'équateur (A) de la sphère au sommet (P) inférieur de la surface portante (2).

3. Procédé selon la revendication 1, caractérisé en ce que la surface portante (2) a la forme d'une zone de sphère, et en ce que la corde (S), déterminant le diamètre (d) de la trajectoire (U) des lames, relie l'équateur (A) de la sphère au bord de délimitation inférieur (6) de la zone de sphère.

4. Procédé selon la revendication 3, caractérisé en ce que la corde (S), déterminant le diamètre (d) de la trajectoire (U) des lames, relie l'équateur (A) de la sphère à un point ($P_b$) diamétralement opposé du bord de délimitation inférieur (6) de la zone de sphère.

5. Procédé selon l'une au moins des revendications précédentes, caractérisé en ce que les deux mouvements d'avance sont exécutés avec l'axe de rotation (13) de l'outil se trouvant dans la même position et avec des sens opposés l'un à l'autre.

6. Procédé selon l'une au moins des revendications précédentes, caractérisé en ce que l'outil (14) est ajusté par introduction dans l'enfoncement (7), jusqu'à ce que soit atteinte une position (L), à partir de laquelle il est déplacé avec l'un des deux mouvements d'avance, le long de l'axe de rotation (13) de l'outil, incliné sous l'angle d'inclinaison ($\alpha$), jusqu'à ce qu'il prenne, lorsque la zone de surface portante (4) est finie au-dessous de l'équateur (A) de la sphère une position de fin de course (S), dans laquelle le plan de la trajectoire (U) des lames contient la corde (S) de la sphère de rayon (R).

7. Procédé selon l'une au moins des revendications précédentes, caractérisé en ce que l'outil (14) est déplacé avec l'autre des deux mouvements d'avance, le long de l'axe de rotation (13) de l'outil, incliné sous l'angle d'inclinaison ($\alpha$), jusqu'à ce qu'il prenne, lorsque la zone de surface portante (3) est finie, au-dessus de l'équateur (A) de la sphère, une autre position de fin de course (S'), dans laquelle le plan de la trajectoire (U) des lames contient une autre corde (S') parallèle à la première corde (S) citée et s'étendant avec une même longueur dans la sphère de rayon (R).

8. Procédé selon l'une au moins des revendications 1 à 6, caractérisé en ce que l'outil (14) est déplacé avec l'autre des deux mouvements d'avance, le long de l'axe de rotation (13) de l'outil, incliné sous l'angle d'inclinaison ($\alpha$), jusqu'à ce qu'il prenne, lorsque la zone de surface portante (3) est finie, au-dessus de l'équateur (A) de la sphère, une autre position de fin de course, dans laquelle le plan de la trajectoire (U) des lames contient une autre corde parallèle à la première corde (S) citée, de même longueur, qui s'étend dans une sphère dont le rayon est supérieur au rayon (R) de la sphère présentant la corde (S).

9. Procédé selon l'une au moins des revendications 6 à 8, caractérisé en ce que dans le cas où l'outil (14) se trouve dans la position L, le point d'intersection (Sp) de l'axe de rotation (13) de l'outil se situe avec le plan de la trajectoire (U) des lames au centre (M) de la sphère.

10. Procédé selon l'une au moins des revendications précédentes, caractérisé en ce que l'outil (14) est déplacé, en supplément au mouvement d'avance exécuté pendant la fabrication de la zone de surface portante (3), au-dessus de l'équateur (A) de la sphère', le long de l'axe de rotation (13) de l'outil, dans un autre mouvement d'avance perpendiculaire à l'équateur (A) de la sphère, vers l'extérieur de l'enfoncement (7).

FIG. 1